# EUROPÄISCHE PATENTANMELDUNG

(11) **EP 1 512 903 A1**
(43) Veröffentlichungstag der Anmeldung: **09.03.2005**
(21) Anmeldenummer: 04019864.0
(22) Anmeldetag: 20.08.2004
(51) Int. Cl.: F21V 7/22

(54) **Infrarotreflektor und Infrarotstrahler mit einem Infrarotreflektor**

(30) Priorität: 05.09.2003 DE 10341502
(71) Anmelder: Patent-Treuhand-Gesellschaft für elektrische Glühlampen mbH, 81543 München (DE)
(72) Erfinder: Schmidt, Hans-Joachim, Dr., 85049 Ingolstadt (DE)

(57) **Zusammenfassung**

Die Erfindung betrifft einen Reflektor (6) für einen Infrarotstrahler mit einer geschwärzten Eloxalschicht (61) und einen Infrarotstrahler mit einer Halogenglühlampe (1) als Strahlungsquelle und einem derartigen Reflektor (6).

## Beschreibung

Die Erfindung betrifft einen Reflektor für Infrarotstrahlung gemäß des Oberbegriffs des Patentanspruchs 1 und einen Infrarotstrahler mit einem derartigen Reflektor.

### I. Stand der Technik

Die Offenlegungsschrift EP 1 072 841 A2 beschreibt einen Infrarotstrahler mit einer Glühlampe als Strahlungsquelle und einem parabolischen Reflektor, der lichtdurchlässig ausgebildet ist und die Infrarotstrahlung in die gewünschte Richtung reflektiert. Die Reflektoröffnung ist mittels einer lichtundurchlässigen Filterscheibe abgedeckt.

### II. Darstellung der Erfindung

Es ist die Aufgabe der Erfindung, einen Reflektor für Infrarotstrahlung sowie einen Infrarotstrahler mit einem möglichst einfachen Aufbau bereitzustellen.

Diese Aufgabe wird erfindungsgemäß durch die Merkmale des Patentanspruchs 1 bzw. 4 gelöst. Besonders vorteilhafte Ausführungen der Erfindung sind in den abhängigen Patentansprüchen beschrieben.

Der erfindungsgemäße Reflektor für Infrarotstrahlung ist erfindungsgemäß mit mindestens einer geschwärzten Eloxalschicht versehen. Dadurch erhält die Oberfläche des Reflektors einen hohen Reflexionsgrad für Infrarotstrahlung im Wellenlängenbereich oberhalb von 780 nm und zugleich wird eine maximale Unterdrückung für Strahlung aus dem sichtbaren Spektralbereich gewährleistet, da die geschwärzte Eloxalschicht lichtabsorbierend wirkt. Bei einer Wellenlänge von 780 nm besitzt die geschwärzte Eloxalschicht einen Reflexionsgrad von 55%, der mit zunehmender Wellenlänge bei ca. 1200 nm kontinuierlich auf einen Wert von 90% der auf die Eloxalschicht auftreffenden Strahlung anwächst. Der erfindungsgemäße Reflektor bietet daher eine kostengünstige Alternative zu herkömmlichen goldbeschichteten Infrarotreflektoren. Außerdem kann der erfindungsgemäße Reflektor mit einer handelsüblichen Halogenglühlampe zu einem Infrarotstrahler hoher Effizienz kombiniert werden, da die Halogenglühlampe den größten Teil ihrer Energie in Form von Infrarotstrahlung im Wellenlängenbereich oberhalb von 780 nm abgibt und das von der Halogenglühlampe emittierte Licht von der geschwärzten Eloxalschicht weitgehend absorbiert wird.

In dem Wellenlängenbereich von 780 nm bis 1200 nm kann der Reflexionsgrad des erfindungsgemäßen Reflektors in vorteilhafter Weise mittels eines lichtdurchlässiges, Infrarotstrahlen reflektierendes Interferenzfilters gesteigert werden, das auf der geschwärzten Eloxalschicht angeordnet ist. Der Reflektor besteht aus Kostengründen vorzugsweise aus Aluminium.

Der erfindungsgemäße Infrarotstrahler besitzt eine Halogenglühlampe als Strahlungsquelle und einem Reflektor, der mit mindestens einer geschwärzten Eloxalschicht versehen ist. Durch die geschwärzte Eloxalschicht erhält die Oberfläche des Reflektors einen hohen Reflexionsgrad für Infrarotstrahlung im Wellenlängenbereich oberhalb von 780 nm und zugleich wird eine maximale Unterdrückung für Strahlung aus dem sichtbaren Spektralbereich gewährleistet, da die geschwärzte Eloxalschicht lichtabsorbierend wirkt. Da die Halogenglühlampe den größten Teil ihrer Energie in Form von Infrarotstrahlung im Wellenlängenbereich oberhalb von 780 nm abgibt und das von der Halogenglühlampe emittierte Licht von der geschwärzten Eloxalschicht weitgehend absorbiert wird, wird nahezu keine Strahlung aus dem sichtbaren Spektralbereich am Reflektor reflektiert. Der erfindungsgemäße Infrarotstrahler arbeitet besonders effizient für Infrarotstrahlung aus dem Wellenlängenbereich von 1200 nm bis 2500 nm, da der Reflexionsgrad der geschwärzten Eloxalschicht in diesem Wellenlängenbereich ungefähr 90% beträgt. Um den Reflexionsgrad des erfindungsgemäßen Reflektors im Wellenlängenbereich von 780 nm bis 1200 nm anzuheben, kann der Reflektor zusätzlich mit einem lichtdurchlässigen, Infrarotstrahlung reflektierenden Interferenzfilter beschichtet sein, das auf der geschwärzten Eloxalschicht angeordnet ist.

Zur Unterdrückung des von der Glühwendel der Halogenglühlampe generierten Lichts ist das Lampengefäß der Halogenglühlampe vorteilhafter Weise mit einem Kaltlichtspiegel versehen, der das von der Glühwendel generierte Licht in das Lampengefäß zurückreflektiert und für Infrarotstrahlung transparent ist. Alternativ kann die Reflektoröffnung mit einer lichtundurchlässigen, für Infrarotstrahlung transparenten Abdeckung versehen werden.

### III. Beschreibung des bevorzugten Ausführungsbeispiels

Nachstehend wird die Erfindung anhand eines bevorzugten Ausführungsbeispiels näher erläutert. Es zeigen:
- Figur 1: Eine teilweise geschnittene Seitenansicht eines Infrarotstrahlers gemäß des bevorzugten Ausführungsbeispiels der Erfindung

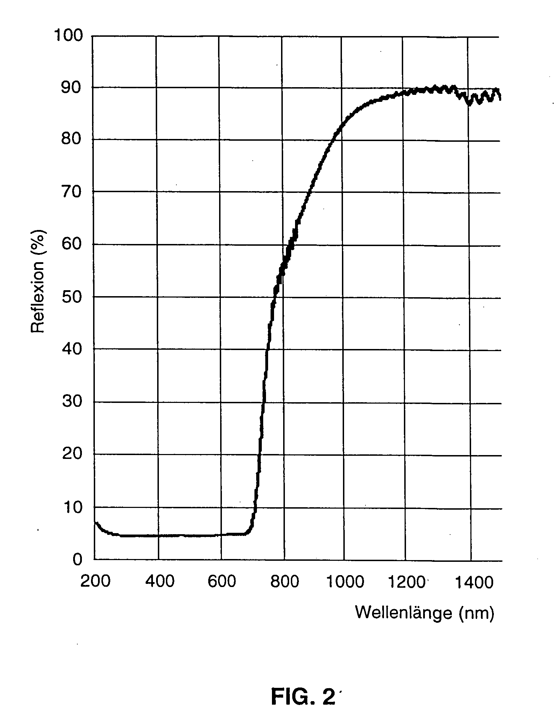

- Figur 2: Den Reflexionsgrad der geschwärzten Eloxalschicht des Reflektors in Abhängigkeit von der Wellenlänge der auftreffenden Strahlung

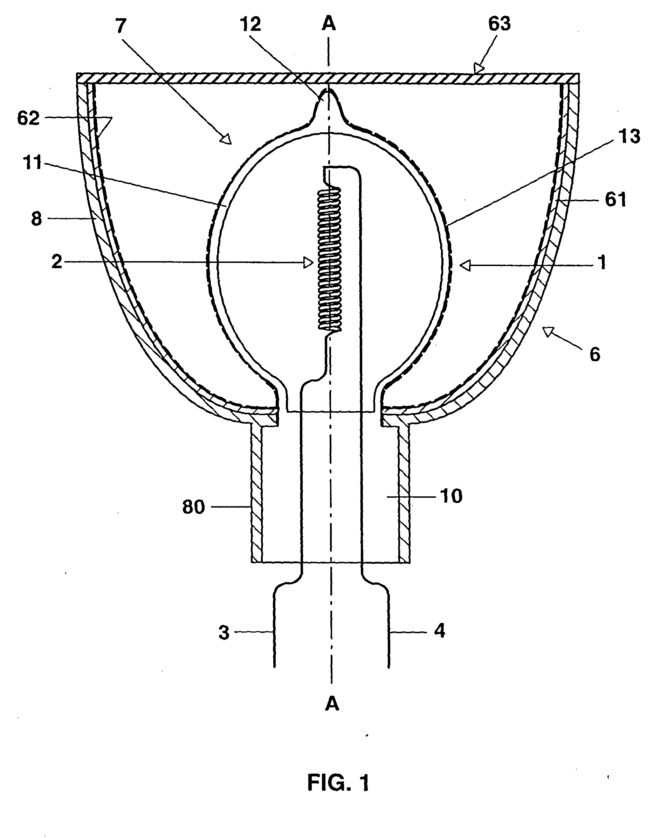

Der in Figur 1 abgebildete Infrarotstrahler besitzt als Strahlungsquelle eine Halogenglühlampe 1 mit einer elektrischen Leistungsaufnahme von ungefähr 50 Watt. Sie besitzt ein einseitig abgedichtetes Lampengefäß aus Quarzglas. Im Innenraum des Lampengefäßes ist eine Glühwendel 2 aus Wolfram angeordnet, die mittels zweier aus dem abgedichteten Ende 10 des Lampengefäßes herausragender Stromzuführungen 3, 4 mit elektrischer Energie versorgt wird. Der die Glühwendel umschließende Bereich 11 des Lampengefäßes ist mit einem als Kaltlichtspiegel ausgebildeten Interferenzfilter 13 beschichtet, das für Infrarotstrahlung transparent ist und das von der Glühwendel generierte Licht zur Wendelaufheizung in das Lampengefäß zurückreflektiert. Das Interferenzfilter 13 erstreckt sich auch über die Kuppe 12 des Lampengefäßes.

Der Infrarotstrahler besitzt außerdem einen schalenförmigen, vorzugsweise parabolischen Reflektor 6, dessen Grundkörper 8 aus Aluminium besteht und dessen der Halogenglühlampe 1 zugewandte Innenseite mit einer geschwärzten Eloxalschicht 61 versehen ist. Bei dieser geschwärzten Eloxalschicht handelt es sich um eine Eloxalschicht mit dem Farbton EV6 gemäß der Bezeichnung des Eloxalverbands. Der Reflektor 6 umschließt die Halogenglühlampe 1. Das abgedichtete Ende 10 des Lampengefäßes der Halogenglühlampe 1 ist in dem Reflektorhals 80 angeordnet.

Die Erfindung beschränkt sich nicht auf das oben näher erläuterte Ausführungsbeispiel. Um den Reflexionsgrad des Reflektors 6 zu verbessern, kann auf der Eloxalschicht 61 beispielsweise ein Interferenzfilter 62 aufgebracht werden, das Infrarotstrahlen reflektiert und Licht transmittiert. Anstelle oder zusätzlich zu dem Kaltlichtspiegel 13 auf dem Lampengefäß kann die Reflektoröffnung mittels einer lichtundurchlässigen, Infrarotstrahlung transmittierenden Abdeckscheibe 63 abgedeckt werden, um die Emission von Licht zu unterdrücken.

## Patentansprüche

1. Reflektor für Infrarotstrahlung mit mindestens einer Schicht aus eloxiertem Aluminium, wobei die mindestens eine Schicht eine geschwärzte Eloxalschicht (61) ist.

2. Reflektor nach Anspruch 1, **dadurch gekennzeichnet, dass** der Reflektor ein Aluminiumreflektor (6) ist, auf dessen Oberfläche die Eloxalschicht (61) angeordnet ist.

3. Reflektor nach Anspruch 1, **dadurch gekennzeichnet, dass** auf der geschwärzten Eloxalschicht (61) ein lichtdurchlässiges, Infrarotstrahlen reflektierendes Interferenzfilter (62) angeordnet ist.

4. Infratrotstrahler mit einer Halogenglühlampe (1) als Strahlungsquelle und einem Reflektor (6),
**dadurch gekennzeichnet, dass** der Reflektor (6) mit mindestens einer geschwärzten Eloxalschicht (61) versehen ist.

5. Infrarotstrahler nach Anspruch 4, **dadurch gekennzeichnet, dass** der Reflektor (6) aus Aluminium besteht.

6. Infrarotstrahler nach Anspruch 4, **dadurch gekennzeichnet, dass** das Lampengefäß der Halogenglühlampe (1) mit einer lichtreflektierenden und für Infrarotstrahlen transpanten Beschichtung (13) versehen ist.

7. Infrarotstrahler nach Anspruch 4, **dadurch gekennzeichnet, dass** die Reflektoröffnung mit einer lichtundurchlässigen Abdeckung (63) versehen ist.

8. Infrarotstrahler nach Anspruch 4, **dadurch gekennzeichnet, dass** auf der geschwärzten Eloxalschicht (61) ein lichtdurchlässiges, Infrarotstrahlen reflektierendes Interferenzfilter (62) angeordnet ist.
